(19) Europäisches Patentamt
European Patent Office
Office européen des brevets

(11) Publication number: **0 002 012**
**A1**

# (12) EUROPEAN PATENT APPLICATION

(21) Application number: 78101302.4

(22) Date of filing: 03.11.78

(51) Int. Cl.²: **C 08 G 81/02**, C 08 C 19/44

(30) Priority: 11.11.77 US 850749

(43) Date of publication of application: 30.05.79 Bulletin 79/11

(84) Designated Contracting States: BE DE FR GB

(71) Applicant: **PHILLIPS Petroleum Company, Bartlesville, Oklahoma 74004 (US)**

(72) Inventor: **Naylor, Floyd Edmond, 106 Ramblewood, Bartlesville, Okla (US)**

(74) Representative: **Geissler, Bernhard, Dr., Widenmayerstrasse 24, D-8000 München 22 (DE)**

## (54) Coupled hydrocarbon polymers and process for their preparation.

(57) A high degree of coupling with high coupling efficiency can be achieved by coupling alkali metal initiated polymers in at least two coupling steps. In a first coupling step, alkali metal initiated polymers are coupled with a non-terminating coupling agent to form a living coupled polymer. This living coupled polymer of the first step is then coupled in a further coupling step with a further coupling agent.

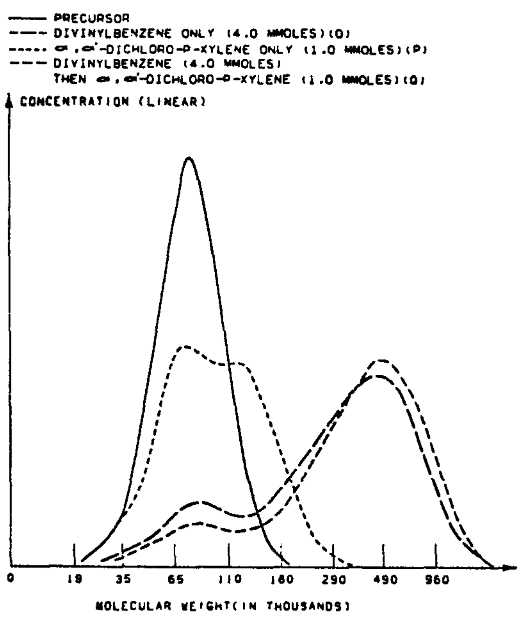


EP 0 002 012 A1

# COUPLED HYDROCARBON POLYMERS AND PROCESS FOR THEIR PREPARATION

It is known that alkadienes as well as monovinylarenes can be polymerized into homopolymers, random copolymers or block copolymers utilizing alkali metal initiator systems. Lithium has been proven to be a particularly good metal for this process. When the initiation is done with an organomonoalkali metal initiator, a living polymer is produced the molecules of which consist essentially of a polymer chain having attached terminally thereto an alkali metal atom.

As is also well known in the art, the polymers having attached thereto an alkali metal atom can be coupled. In one procedure, two or more of these molecules are chemically connected to a central unit originating from the coupling agent so that two or more polymer chains are attached to this one central unit. This process of coupling is used primarily for increasing the green tensile strength of rubbery polymers and for making linear and radial block copolymers that may have the desirable properties of thermoplastic elastomers. Thermoplastic elastomers can be obtained by coupling more than

two living monoalkali polymer chains such as to form a radial teleblock copolymer having polymer chains connected to one central unit, the free ends of which consist of polymer blocks that are capable of forming physical crosslinks, whereas at least a portion of the remaining polymer chains contributes to the rubbery properties of the so formed composition. These thermoplastic elastomers have the desirable property of having high tensile strength without being chemically crosslinked and can be melted and formed into various shapes like plastics.

As a general rule, it is desirable to achieve a high degree of coupling as well as a high coupling efficiency. To improve these features of a process for making coupled polymers as described remains a continuing problem.

The Invention

It is one object of this invention to provide a new process for making coupled polymers.

Another object of this invention is to provide a new process for coupling living alkali metal initiated polymers with both a high degree of coupling and a high coupling efficiency.

Yet a further object of this invention is to provide novel coupled polymers.

Still another object of this invention is to provide novel thermoplastic elastomers.

These and other objects, advantages, aspects, features, details and embodiments of this invention will become apparent to those skilled in the art from the following detailed description of the invention, the examples, and attached claims.

In accordance with this invention, I have found that a high degree of coupling and a high coupling efficiency can be achieved by coupling an alkali metal initiated polymer in a first coupling step by reacting a living alkali initiated polymer with a non-terminating coupling agent and to couple the initial

living coupled polymer formed in this first step with a second coupling agent to form a final coupled polymer. As a general rule and preferably the non-terminating first coupling agent utilized is one that is capable of coupling monoalkali metal polymers with a high degree of coupling, whereas the second coupling agent is one that is capable of coupling monoalkali metal polymers to a low degree of coupling.

In accordance with one embodiment, this invention provides for a polymer having the formula

$$Q_{m'} - X' \leftarrow (Y-Q')_e$$

wherein m' polymer chains Q- and e units - Y-Q' are attached to a central hydrocarbyl unit X' and where Q is a polymer or copolymer of at least one alkadiene of 4 to about 12 carbon atoms, X' is a central hydrocarbyl unit derived from coupling agents of 10 to about 30 carbon atoms having two or three vinyl radicals directly attached to otherwise unsubstituted or alkyl substituted benzene, biphenyl or naphthalene, Y is a radical or bond resulting from a coupling process with a difunctional coupling agent capable of coupling alkali-metal terminated polymers, the radicals O' which can be the same or different are -Q or $(X''-Q_{m''})$, e, m' and m" being integers and the average number of polymer chains Q being present in the molecules is in the range of 8 to 15 and wherein X" is a central hydrocarbyl unit derived from coupling agents of 10 to about 30 carbon atoms having two or three vinyl radicals directly attached to otherwise unsubstituted or alkyl substituted benzene,

biphenyl, or naphthalene, and central units X' and X" being the same or different. The average number of polymer chains Q incorporated into one polymer molecule can be defined as the degree of coupling; the degree of coupling is determined by a method explained later. The polymers of this invention thus have a degree of coupling in the range of 8 to 15. The preferred polymer chains Q as well as the preferred central units X' and radicals Y are described in more detail in connection with the process to produce the polymers.

The living polymers to be coupled by this process are those prepared by hydrocarbyl alkali metal initiated, solution polymerization methods as described, for example, in U.S. patents 2,975,160; 3,265,765; 3,281,383 and

3,301,840. These living polymers can be prepared in a batch process, in a continuous process, or in combinations thereof. The intermediate formation of living polymers is normally carried out in an inert hydrocarbon solvent which is not detrimental to the polymerization process. Suitable solvents include paraffinic, cycloparaffinic, and aromatic hydrocarbons, and mixtures thereof. Examples of such solvents include n-pentane, n-hexane, n-heptane, 2,2,4-trimethylpentane, cyclohexane, cyclopentane, benzene, toluene, and xylene. A mixture of non-polar and polar solvents may be employed if it is desired to enhance the formation of a particular polymer structure, e.g. to influence the vinyl content or the formation of random copolymer, or to improve the efficiency of the polymerization process. Such a polar solvent preferably should not interact in an adverse manner with the initiator, monomers, coupling agents, or other ingredients of the polymerization recipe. Polar solvents which may be used include cyclic and acyclic ethers, thioethers, tertiary amines, and other such polar solvents used for this purpose as disclosed in the art.

Monomers suitable for the preparation of the living polymers are the conjugated alkadienes and the monovinylarenes having the vinyl radical attached directly to a carbon atom of the aromatic ring.

Suitable conjugated dienes are those containing from about 4 to 12 carbon atoms per molecule, more preferably from 4 to 8 carbon atoms per molecule. Examples of such monomers are 1,3-butadiene, isoprene, 2,3-dimethyl-1,3-butadiene, piperylene, 3-butyl-1,3-octadiene, and 2-phenyl-1,3-butadiene and mixtures thereof. Especially preferred are 1,3-butadiene and isoprene due to their availability and favorable cost.

The monovinylarene monomers normally contain from about 8 to 20 carbon atoms per molecule and can contain alkyl, cycloalkyl, and aryl substituents, and combinations thereof such as alkylaryl, in which the total number of carbon atoms in the combined substituents is generally not greater than 12.

Examples of aromatic monomers include styrene, α-methylstyrene, 3-methylstyrene, 4-n-propylstyrene, 4-cyclohexylstyrene, 4-dodecylstyrene, 2-ethyl-4-benzylstyrene, 4-p-tolylstyrene, 4-(4-phenyl-n-butyl)styrene, 1-vinylnaphthalene, and 2-vinylnaphthalene. Styrene is the presently preferred monovinylarene because of its availability and effectiveness to form physical crosslinks in the block copolymers herein described.

Suitable polymerization initiators are the organomonoalkali compounds. More specifically organomonosodium, -monopotassium and -monolithium compounds can be used. The organolithium compounds of the general formula RLi, wherein R is a hydrocarbyl radical selected from the group consisting of aliphatic, cycloaliphatic, and aromatic radicals, and combinations thereof are the preferred initiators. The R in the above formula is a hydrocarbyl radical with from 1 to about 20, carbon atoms. High molecular weight initiator compounds can be utilized. Examples of suitable organomonolithium compounds include methyllithium, isopropyllithium, n-butyllithium, sec-butyllithium, t-octyllithium, n-dodecyllithium, n-eicosyllithium, phenyllithium, 1-naphthyllithium, p-tolyllithium, 4-phenylbutyllithium, cyclohexyllithium, and 4-cyclohexylbutyllithium.

The amount of organolithium initiator to be used depends upon the desired molecular weight of the polymer. Normally in the range of about 0.1 to 100 milliequivalents of lithium per 100 grams of total monomer are used.

Polymerization conditions generally known to the art are employed to form the monoalkali polymer. The polymerization temperature can vary over a broad range and is generally about -50° to 150° C. It is preferable to operate within a temperature range of 50° to 150° C. The pressure is selected to be high enough to maintain the diluent substantially in the liquid phase.

The living polymers to be coupled by this process include homopolymers, random copolymers and block copolymers, the latter including those containing random or tapered block segments, and mixtures thereof. For the production of

thermoplastic elastomers the preferred living polymer has the formula

E - D - M

in which E represents a polymer block capable of forming physical crosslinks and D represents a portion of a polymer chain that renders the molecule rubbery; M is an abbreviation for an alkali metal atom, specifically one selected from the group consisting of sodium, potassium and lithium, with lithium being the preferred alkali metal. More specifically and in accordance with a preferred embodiment, E is a polymer block selected from the group of polyvinylarene from monovinylarenes having 8 to 20 carbon atoms per molecule, preferably from styrene, and hydrogenated low vinyl polybutadiene. The block D preferably is a homopolymer of an alkadiene having 4 to 12 carbon atoms per monomer molecule or a random, tapered or block copolymer section of one or more alkadienes of 4 to 12 carbon atoms per molecule and one or more monovinylarene monomers of 8 to 20 carbon atoms per molecule. The preferred alkadiene monomers as well as the preferred monovinylarene monomers are the same as those described above.

The coupled polymers of this invention are generally described as radial polymers, being highly branched and typically having 8 to 15 branches per molecule. These coupled polymers include liquid, semi-liquid, and solid (all under normal conditions) homo- and copolymers of conjugated dienes in which the diene monomer addition can be in the 1,2 mode or the 1,4 mode or combinations thereof. Generally the coupled polymers obtained by the process of this invention have a number average molecular weight of 5,000 to 3,000,000, more preferably 50,000 to 1,500,000.

## Coupling Agents

The initial or first coupling agent utilized in accordance with this invention is a non-terminating coupling agent. By the term "non-terminating coupling agents", such chemicals are meant that do not remove the alkali metal to any substantial degree from the coupled polymer but rather form a living coupled polymer in which a plurality of polymer chains are attached to a

central unit and approximately the same number of alkali metals are also attached to this central unit. Therefore, particularly halogen-based coupling agents such as silicon tetrachloride are not within the scope of the initial or first non-terminating coupling agent.

The initial coupling step is accomplished preferably using a non-terminating coupling agent capable of coupling the living polymer to a high degree of coupling of about 8-15. Polyvinyl aromatic compounds are the preferred non-terminating coupling agents. Polyvinyl aromatic compounds useful in accordance with this invention are exemplified by the following general formulae:

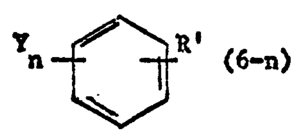

(a)

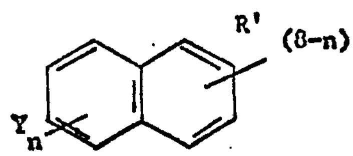

(b)

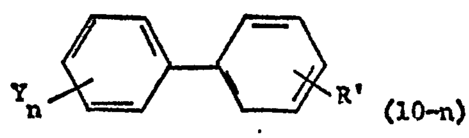

(c)

wherein Y is a vinyl group, and wherein each R' is hydrogen or an alkyl group containing from 1 to 4 carbon atoms with a total of the alkyl substituents having no more than 12 carbon atoms, and wherein n is an integer of 2 or 3. The vinyl substituents in the above formulas (b) and (c) can be on either or both rings. Exemplary of suitable polyvinyl aromatic compounds are 1,2-divinylbenzene; 1,3-divinylbenzene; 1,4-divinylbenzene; 1,2,4-trivinylbenzene; 1,3-divinylnaphthalene; 1,8-divinylnaphthalene; 1,3,5,-trivinylnaphthalene; 2,4-divinylbiphenyl; 3,5,4'-trivinylbiphenyl; 1,2-divinyl-3,4-dimethylbenzene; 1,5,6-trivinyl-3,7-diethylnaphthalene; 1,3-divinyl-4,5,8-tributylnaphthalene;

and 2,2'-divinyl-4-ethyl-4'-propylbiphenyl. Divinyl aromatic hydrocarbons containing up to 26 carbon atoms per molecule are preferred for employment according to this invention, particularly divinylbenzene in either its ortho, meta, or para isomer. Commercial divinylbenzene which is a mixture of said isomers is also quite satisfactory.

The amounts of non-terminating coupling agent to be used broadly covers a polyvinyl aromatic compound:alkali metal molar ratio of 0.25:1 to 10:1, more preferably 1.5:1 to 5:1.

The second coupling agent does not have to be a non-terminating coupling agent. The second coupling agent which is added sequentially after the first coupling agent, is usually one that is capable of coupling a living polymer to a low degree of coupling of about 2. The preferred group of second coupling agents is composed of those which are capable of coupling only two living polymer chains, i.e. dicoupling agents. The degree of coupling both for the initial non-terminating coupling agent and for the second coupling agent is determined and measured as will be described in detail later. Preferred examples of second coupling agents are carbon monoxide, carbon dioxide, carbon disulfide, carbonyl sulfide, $\alpha,\alpha$'-dichloro-p-xylene, methyl methacrylate, bromine, chlorine, iodine, ethyl acetate, methyl propionate, butyrolactone, bis(bromomethyl) ether, 1,4-dichloro-2-butene, dimethyldichlorosilane, and dibromosilane. The amount of second coupling agent which can be used is generally in the range of molar ratios of difunctional coupling agent:alkali metal of 0.2:1 to 5:1, more preferably 0.2:1 to 1.25:1.

The coupling agents can be added neat to the polymer cement (polymer solution as formed), or as a solution in an inert hydrocarbon solvent. Examples of such solvents are the same as those of the diluents for the polymerization process given above.

The temperature range applicable for the coupling reactions is the same as that for the polymerization reaction. The polymerization cements (polymer solutions as formed) with the added coupling agents are agitated, e.g. by stirring or tumbling for the duration of the coupling reaction. The coupling reaction with divinylbenzene or other polyvinyl aromatic compound

is allowed to proceed for 10 minutes to 2 hours, more generally from 30 to 60 minutes. The difunctional coupling agents are generally allowed to react 1 to 60 minutes, more generally 5 to 30 minutes. Following the coupling reactions, the coupled polymers are recovered from the polymerization mixtures by typical procedures known in the art such as coagulation in an alcohol.

The living polymers that are coupled in accordance with this invention can be described as having the general formula

$$Q - M$$

wherein Q is a hydrocarbon polymer or copolymer of an alkadiene and/or a monovinyl-substituted arene and wherein M stands for an alkali metal atom. The preferred group of alkali metal atoms M is selected from the group consisting of sodium, potassium and lithium, lithium being the most preferred. After the first non-terminating coupling step a living coupled polymer is obtained that has the formula

$$Q_{m'} - X - M_m$$

wherein X represents a central unit obtained or derived from the coupling agent and m and m' are integers that are generally equal to each other.

For the production of thermoplastic elastomers, those living polymers having the general formula

E - D - M

are particularly preferred. In this formula, E represents a block that is capable of forming a physical crosslink. Such blocks can either be characterized as polymer blocks capable of forming crystalline regions (eventually after their hydrogenation) or as blocks forming domains having a glass transition temperature above their normal temperature of use. Preferred examples of those blocks E are low vinyl polybutadiene blocks and polymonovinylarene blocks from monovinylarenes having 8 to 20 carbon atoms. The low vinyl polybutadiene end block after hydrogenation forms polyethylene-like crystalline centers whereas, for example, polystyrene blocks form glassy polystyrene areas; both function as a physical crosslink giving the final polymer a very high tensile strength without actual chemical crosslinking. The block D is a homopolymer or a copolymer of an alkadiene having 4

to 12 carbon atoms per molecule and contributing rubbery properties to the polymer. This section D can be a single block or can be composed of several blocks. Examples for this block D are medium vinyl polybutadiene, polyisoprene, and a random butadiene/styrene copolymer block.

In accordance with a further embodiment of this invention, the final coupled polymer is subjected to an additional step of at least partially hydrogenating the olefinic unsaturation thereof leaving the aromatic unsaturation essentially unchanged. This hydrogenation step is carried out in the presence of hydrogen and in the presence of a hydrogenation catalyst under hydrogenation conditions. Such hydrogenation catalysts and hydrogenation conditions are generally well known in the art and a detailed description thereof can therefore be avoided. The hydrogenated coupled polymer is finally recovered as the product of the process. The latter can be done, for instance, by a standard procedure, such as coagulation and filtration. The hydrogenation of the olefinic unsaturations described is particularly well suited as a means for producing a thermoplastic elastomer starting from polymers having the above defined formula E - D - M with E being a e.g. low vinyl polybutadiene block.

In accordance with a still further embodiment of this invention, coupled polymers are provided which can be defined as being obtainable by a process as defined. The coupled copolymers of this invention therefore are those obtained by coupling a living polymer in a first coupling step as defined followed by a second coupling step as defined in detail above.

The polymers of the present invention can be used in various applications, depending upon their specific properties. Many of these polymers are rubbery and these polymers can therefore be shaped into articles which desirably have elastic properties. These articles can be then crosslinked by methods well known in the art. Other applications of the polymers of this invention are in the field of thermoplastic elastomers. These polymers as described can be formed into various shapes such as hoses or belts exhibiting high tensile strength without chemical curing.

The invention will be more fully understood from the following examples, which are intended to illustrate yet more preferred embodiments of this invention but not to unduly limit the scope thereof.

Example I

Polymerizations were carried out employing essentially anhydrous reagents and conditions under an inert atmosphere (nitrogen) in 26-oz. beverage bottles equipped with a perforated Crown cap over a self-sealing rubber gasket. Ingredients were charged and the polymerizations conducted at the conditions as shown in the following Recipe 1.

Recipe 1

| | Polymer Identification | | | |
|---|---|---|---|---|
| | A | B | C | D |
| **Step I** | | | | |
| Cyclohexane, parts by weight | 390 | 390 | 390 | 390 |
| Sec-Butyllithium, mhm[a] | 2.6 | 2.6 | 3.0 | 2.0 |
| Styrene, parts by weight | 30 | 30 | 30 | 40 |
| Polymerization time, minutes | 15 | 15 | 15 | 15 |
| Polymerization temperature, °C | 70 | 70 | 70 | 70 |
| **Step II** | | | | |
| Cyclohexane, parts by weight | 390 | 390 | 390 | 390 |
| 1,3-Butadiene, parts by weight | 70 | 70 | 70 | 60 |
| Polymerization time, minutes | 45 | 45 | 45 | 45 |
| Polymerization temperature, °C | 70 | 70 | 70 | 70 |

Following the completion of Step II, 2,4-di-t-butyl-4-methylphenol (one part by weight per hundred parts of total monomers) was added in a 50/50 (by volume) toluene/isopropyl alcohol solution to a sample of each of the polymerization cements (polymer cement as formed), and the polymers recovered by adding the polymerization mixtures to isopropyl alcohol. The coagulated polymers were collected by filtration and dried under reduced pressure. Physical properties of these butadiene-styrene linear block copolymers are tabulated in Table I and serve as comparisons for the coupled polymers produced by addition of coupling agents to additional samples of the polymerization cements containing the living polymers A, B, C, and D.

Table I

Physical Properties of Butadiene-Styrene Linear Block Copolymers Prior to Coupling

| | Polymer Identification | | | |
|---|---|---|---|---|
| | A | B | C | D |
| Inherent Viscosity b) | 0.60 | d) | 0.58 | 0.55 |
| Molecular Weight, $M_w$ c) | 37,000 | d) | 42,000 | 65,000 |
| Molecular Weight, $M_n$ c) | 30,000 | d) | 32,000 | 55,000 |

Example II

Coupling of Polymerlithium With Divinylbenzene and Carbon Monoxide

Living polymers A and C from Example I were coupled by treating the respective polymerization cements in a first coupling step with divinylbenzene and thereafter in a second coupling step with carbon monoxide according to Recipe 2. Divinylbenzene was charged as a solution (~ 20%) in ethylstyrene and diethylbenzene. Carbon monoxide was charged as a gas from a 50-ml. syringe.

 Recipe 2

| Step I | Coupled Polymer Identification E | F | G | H | I |
|---|---|---|---|---|---|
| Polymerization cement Identification e) | A | A | C | A | A |
| Polymerlithium, parts by weight | 100 | 100 | 100 | 100 | 100 |
| Cyclohexane, parts by weight | 780 | 780 | 780 | 780 | 780 |
| Divinylbenzene, mhm a) | 2.6 | 5.2 | 0 | 2.6 | 5.2 |
| Reaction time, minutes | 45 | 45 | - | 45 | 45 |
| Reaction temperature, °C | 70 | 70 | - | 70 | 70 |
| **Step II** | | | | | |
| Carbon monoxide, mhm a) | 0 | 0 | 1.5 | 1.5 | 1.5 |
| Reaction time, minutes | - | - | 30 | 30 | 30 |
| Reaction temperature, °C | - | - | 70 | 70 | 70 |

Following the completion of Step II, the polymers were recovered according to the procedure described in Example I.

Properties of the coupled polymers prepared using Recipe 2 are tabulated in Table II. Figures 1 and 2 show the GPC (gel permeation chromatograph) curves and makes reference to the individual polymers of this example.

Table II

Properties of Polymers Coupled With Divinylbenzene and Carbon Monoxide

| | Coupled Polymer Identification E | F | G | H | I |
|---|---|---|---|---|---|
| Divinylbenzene/lithium molar ratio | 1:1 | 2:1 | - | 1:1 | 2:1 |
| Carbon monoxide/lithium molar ratio | - | - | 0.5:1 | 0.58:1 | 0.58:1 |
| Inherent viscosity b) | 0.77 | 0.83 | 0.80 | 0.88 | 1.07 |
| Molecular weight, $M_w$ c) | 164,000 | 301,000 | 96,000 | 324,000 | 422,000 |
| Molecular weight, $M_n$ c) | 60,000 | 100,000 | 54,000 | 122,000 | 166,000 |
| Coupling efficiency, % f) | 45 | 62 | 55 | 84 | 88 |
| Degree of coupling g) | 8 | 9 | 2 | 2,9 | 11 |

Comparison of the inherent viscosity and molecular weight of the coupled polymers E, F, and G with their uncoupled counterparts A and C (Table I) show that coupling occurs with either divinylbenzene or carbon monoxide. The coupling efficiency observed using either of these agents alone at the stipulated molar ratios indicates that only about one half of the living polymer has been coupled. The degree of coupling observed using divinylbenzene alone (E and F) is indicative of the formation of a radial

coupled by each divinylbenzene molecule. The degree of coupling of 2 achieved with the carbon monoxide illustrates its difunctional character in coupling two polymerlithiums to form a linear coupled product.

The sequential coupling of polymerlithium with divinylbenzene and carbon monoxide results in significantly higher coupling efficiencies (H and I), indicating that carbon monoxide effectively couples the imperfectly divinylbenzene coupled polymer product. When the imperfectly coupled polymer product obtained using a 1:1 divinylbenzene/lithium molar ratio was further coupled with carbon monoxide (H), two coupled products were formed. The distribution of polymer products and the degree of coupling calculated from the gel permeation chromatographic curve indicated that 40% of the living polymer coupled to linear polymer, a degree of coupling of 2, and 60% coupled to a radial polymer with a degree of coupling of 9.

A completely unexpected result occurred when the divinylbenzene/lithium molar ratio was increased to 2:1 and this product then further coupled with carbon monoxide. On the GPC curve no coupling of uncoupled polymerlithium to a linear chain (degree of coupling of 2) could be detected, but instead the GPC curve shows that only radial polymer was formed having a degree of coupling of 11, i.e. the final polymer had an average of 11 of the original polymerlithium chains coupled to a highly branched radial polymer.

Example III

Coupling of Polymerlithium With Divinylbenzene and Carbon Dioxide

Living polymers B and C from Example I were coupled by treating the respective polymerization cements with divinylbenzene and carbon dioxide according to Recipe 3. Coupling agents were added as described in Example II.

## Recipe 3

| Step I | Coupled Polymer Identification J | K | L | M | N |
|---|---|---|---|---|---|
| Polymerization cement Identification[a)] | B | B | C | B | B |
| Polymerlithium, parts by weight | 100 | 100 | 100 | 100 | 100 |
| Cyclohexane, parts by weight | 780 | 780 | 780 | 780 | 780 |
| Divinylbenzene, mhm[a)] | 2.6 | 5.2 | 0 | 2.6 | 5.2 |
| Reaction time, minutes | 45 | 45 | - | 45 | 45 |
| Reaction temperature, °C | 70 | 70 | - | 70 | 70 |
| **Step II** | | | | | |
| Carbon dioxide, mhm[a)] | 0 | 0 | 1.5 | 1.5 | 1.5 |
| Reaction time, minutes | - | - | 30 | 30 | 30 |
| Reaction temperature, °C | - | - | 70 | 70 | 70 |

Polymers were recovered according to the procedure described in Example I.

Properties of the coupled polymers prepared using Recipe 3 are tabulated in Table III. Figures 3 and 4 show GPC curves similar to Figures 1 and 2.

Table III

Properties of Polymers Coupled With Divinylbenzene and Carbon Dioxide

| | Coupled Polymer Identification J | K | L | M | N |
|---|---|---|---|---|---|
| Divinylbenzene/lithium molar ratio | 1:1 | 2:1 | - | 1:1 | 2:1 |
| Carbon dioxide/lithium molar ratio | - | - | 0.5:1 | 0.58:1 | 0.58:1 |
| Inherent viscosity[b)] | 0.69 | 0.80 | 0.79 | 0.82 | 0.89 |
| Molecular weight, $M_w$[c)] | 176,000 | 300,000 | 108,000 | 317,000 | 493,000 |
| Molecular weight, $M_n$[c)] | 61,000 | 98,000 | 61,000 | 134,000 | 177,000 |
| Coupling efficiency, %[f)] | 45 | 66 | 60 | 85 | 86 |
| Degree of coupling[g)] | 8 | 9 | 2 | 2.9 | 10 |

The results of this experiment are analogous with those obtained with carbon monoxide (Example II), sequential addition of the two coupling agents resulting in high coupling efficiency, and the use of 2:1 molar ratio of divinylbenzene/lithium followed by carbon dioxide unexpectedly resulting in no formation of linear product detectable on a GPC curve as is obtained when a 1:1 divinylbenzene/lithium molar ratio is used.

Example IV

Coupling of Polymerlithium With Divinylbenzene and α,α'-Dichloro-p-xylene

Living polymer D from Example I was coupled with divinylbenzene and α,α'-dichloro-p-xylene according to Recipe 4. Divinylbenzene was added as the solution described in Example II. α,α'-Dichloro-p-xylene was added as a dilute solution (~0.5 molar) in cyclohexane.

Recipe 4

| | Coupled Polymer Identification | | |
|---|---|---|---|
| Step I | O | P | Q |
| Polymerization cement, identification e) | D | D | D |
| Polymerlithium, parts by weight | 100 | 100 | 100 |
| Cyclohexane, parts by weight | 780 | 780 | 780 |
| Divinylbenzene, mhm a) | 4.0 | 0 | 4.0 |
| Reaction time, minutes | 45 | - | 45 |
| Reaction temperature, °C | 70 | - | 70 |
| Step II | | | |
| α,α'-Dichloro-p-xylene, mhm a) | 0 | 1.0 | 1.0 |
| Reactor time, minutes | - | 30 | 30 |
| Reactor temperature, °C | - | 70 | 70 |

Polymers were recovered using the procedure described in Example I.

Properties of the coupled polymers prepared using Recipe 4 are tabulated in Table IV. Figure 6 shows GPC curves for the uncoupled polymer and the three coupled polymers as identified.

Table IV

Properties of Polymers Coupled with Divinylbenzene and α,α'-Dichloro-p-xylene

| | Coupled Polymer Identification | | |
|---|---|---|---|
| | O | P | Q |
| Divinylbenzene/lithium molar ratio | 2:1 | - | 2:1 |
| α,α'-Dichloro-p-xylene/lithium molar ratio | - | 0.5:1 | 0.5:1 |
| Inherent viscosity b) | 0.87 | 0.83 | 1.52 |
| Coupling efficiency, % f) | 62 | 45 | 89 |
| Degree of coupling g) | 9 | 2 | 10 |

These data illustrate the enhanced coupling efficiency and the absence of linear product obtained by sequential coupling of polymerlithium

using 2:1 molar ratio of divinylbenzene/lithium followed by α,α'-dichloro-p-xylene.

Example V

Coupling of Polymerlithium With Divinylbenzene and Methyl Methacrylate

Living polymer D from Example I was coupled with divinylbenzene and methyl methacrylate according to Recipe 5. Coupling reagents were added as solutions as described in Example IV.

Recipe 5

| | Coupled Polymer Identification | | |
|---|---|---|---|
| Step I | Q | R | S |
| Polymerization cement, identification [e)] | D | D | D |
| Polymerlithium, parts by weight | 100 | 100 | 100 |
| Cyclohexane, parts by weight | 780 | 780 | 780 |
| Divinylbenzene, mhm [a)] | 4.0 | 0 | 4.0 |
| Reaction time, minutes | 45 | - | 45 |
| Reaction temperature, °C | 70 | - | 70 |
| Step II | | | |
| Methyl methacrylate, mhm [a)] | 0 | 1.0 | 1.0 |
| Reaction time, minutes | - | 30 | 30 |
| Reaction temperature, °C | - | 70 | 70 |

Polymers were recovered using the procedure described in Example I.

Properties of the coupled polymers prepared using Recipe 5 are tabulated in Table V. Figure 5 shows GPC curves for the uncoupled polymer and the three coupled polymers.

Table V

Properties of Polymers Coupled With Divinylbenzene and Methyl Methacrylate

| | Coupled Polymer Identification | | |
|---|---|---|---|
| | Q | R | S |
| Divinylbenzene/lithium molar ratio | 2:1 | - | 2:1 |
| Methyl methacrylate/lithium molar ratio | - | 0.5:1 | 0.5:1 |
| Inherent viscosity [b)] | 0.87 | 0.84 | 1.08 |
| Coupling efficiency, % [f)] | 62 | 87 | 85 |
| Degree of coupling [g)] | 9 | 2.5 | 9 |

These data illustrate that sequential addition of divinylbenzene and methyl methacrylate to polymerlithium results in the formation of a highly branched radial copolymer with a high degree of coupling efficiency,

this combination of parameters not being obtainable with either of the coupling agents alone when used at these molar ratios and reaction conditions.

### Example VI

### Coupling of Polymerlithium With Divinylbenzene and Dimethyldichlorosilane

Living polymer D from Example I was coupled with divinylbenzene and dimethyldichlorosilane according to Recipe 6. Coupling reagents were added as solutions as described in Example IV.

**Recipe 6**

| | Coupled Polymer Identification | | |
|---|---|---|---|
| **Step I** | O | T | U |
| Polymerization cement, identification | D | D | D |
| Polymerlithium, parts by weight | 100 | 100 | 100 |
| Cyclohexane, parts by weight | 780 | 780 | 780 |
| Divinylbenzene, mhm [a] | 4.0 | 0 | 4.0 |
| Reaction time, minutes | 45 | - | 45 |
| Reaction temperature, °C | 70 | - | 70 |
| **Step II** | | | |
| Dimethyldichlorosilane, mhm [a] | 0 | 1.0 | 1.0 |
| Reaction time, minutes | - | 30 | 30 |
| Reaction temperature, °C | - | 70 | 70 |

[a] (marker printed after "Polymerization cement, identification")

Polymers were recovered using the procedure described in Example I.

Properties of the coupled polymers prepared using Recipe 6 are tabulated in Table VI. Figure 7 shows GPC curves of the uncoupled polymer and the coupled polymers.

### Table VI

### Properties of Polymers Coupled with Divinylbenzene and Dimethyldichlorosilane

| | Coupled Polymer Identification | | |
|---|---|---|---|
| | O | T | U |
| Divinylbenzene/lithium molar ratio | 2:1 | - | 2:1 |
| Dimethyldichlorosilane/lithium molar ratio | - | 0.5:1 | 0.5:1 |
| Inherent viscosity [b] | 0.87 | 0.89 | 1.02 |
| Coupling efficiency, % f) | 62 | 55 | 74 |
| Degree of coupling [f] | 9 | 2 | 9 |

These data illustrate that the coupling efficiency obtained using a sequential addition of divinylbenzene and dimethyldichlorosilane is greater than can be achieved using either coupling agent alone at the given molar ratio

and given reaction conditions and that a highly branched, radial teleblock copolymer can be obtained from a given living polymer using the sequential addition of two coupling agents which has a higher inherent viscosity (higher molecular weight) than can be obtained using divinylbenzene alone.

<u>Footnotes Applicable to All Examples:</u>

a) Millimoles per 100 grams of total monomers used to prepare the polymerlithium.

b) Inherent viscosity was determined according to the procedure given in U.S. Patent 3,278,508, column 20, Note <u>a</u> with the modification that the solution was <u>not</u> filtered through a sulfur absorption tube but rather a sample of the solution was filtered through a fritted glass filter stick of grade C porosity and pressured directly into the viscometer.

c) Molecular weights were determined from gel permeation chromatography curves by a procedure described by Gerard Kraus and C. J. Stacy, J. Poly. Sci.: Symposium 43, 329-343 (1973).

d) Not determined.

e) Polymerization cement (polymer solution as formed) identifications and properties are given in Recipe 1 and Table I of Example I.

f) Coupling efficiency ($E_c$) is defined as the percentage of the living polymer molecules which are incorporated into the coupled polymer. $E_c$ is calculated from the gel permeation chromatographic curve by dividing the area under the peak representing the coupled polymer by the areas under the peaks representing the coupled and uncoupled polymers and multiplying by 100.

g) Degree of coupling (p) is defined as the number of living polymer molecules attached to one central unit derived from a coupling reagent and is determined from the gel permeation chromatographic curve using the formula $\frac{V_c}{V_u} = (3p-2)^{1/2}p^a$ wherein $V_c$ and $V_u$ are the hydrodynamic volumes of the coupled and uncoupled polymers taken from the GPC universal calibration curve, and a is the exponent from the intrinsic viscosity equation $[\eta] = kM^a$ wherein $[\eta]$ is intrinsic viscosity, M is the viscosity molecular weight, and k and a are constants for a given polymer-solvent system. Procedures for determining the constants a and k, and a GPC universal calibration curve are given in G. Kraus and C. J. Stacy, J. Poly. Sci. A-2, <u>10</u>, 657 (1972).

Reasonable variations and modifications which will become apparent to those skilled in the art can be made in this invention without departing from the spirit and scope thereof.

26 262 E

# CLAIMS

1. A process to couple a living polymer having the formula

$$Q - M$$

wherein Q is a hydrocarbon polymer having one alkali metal atom M terminally attached thereto with a coupling agent in order to chemically connect such living polymer molecules to form larger polymer molecules, characterized in that said coupling comprises two coupling steps of

(a) in a first coupling step reacting said living polymer Q - M with a non-terminating first coupling agent such as to form an initial living coppled polymer having the formula

$$Q_{m'} - X - M_m$$

wherein Q represents one of m' polymer chains Q coupled via the coupling unit X which is derived from said non-terminating first coupling agent, and m' and m are integers essentially equal to each other,

(b) in a second coupling step further coupling said coupled living polymer $Q_{m'} - X - M_m$ with a second coupling agent to form a further coupled polymer.

2. A process according to claim 1) characterized in that said living polymer has the formula

$$E - D - M$$

wherein E represents a block selected from the group of poly-monovinylarene blocks from monovinylarenes having from 8 to 20 carbon atoms per molecule, and hydrogenated low vinyl polybutadiene blocks and
D consists of one or more homopolymer or copolymer blocks of alkadienes having 4 - 12 carbon atoms per molecule, said section D contributing to rubbery properties of the coupled polymer.

3. A process in accordance with claim 1) or 2) characterized in that a polyvinyl aromatic compound selected from the group defined by the following general formulae

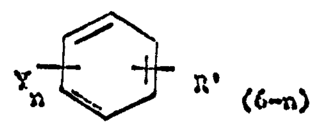

(a)

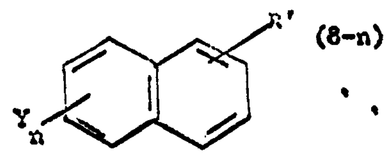

(b)

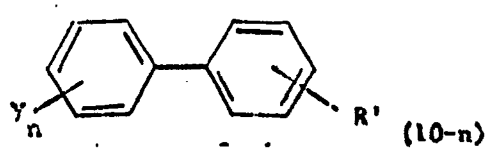

(c)

is used as said non-terminating first coupling agent, wherein Y is a vinyl group, R' is selected from the group consisting of hydrogen, and alkyl groups containing from 1 to 4 carbon atoms with the total of actual substituents having not more than 12 carbon atoms, n is an integer of 2 or 3 and the vinyl substituents in the formula (b) and (c) being attached to one or both of the aromatic rings and in that said second coupling agent is selected from the group consisting of carbon monoxide, carbon dioxide, α,α'-dichloro-p-xylene, methyl methacrylate and dimethyl dichlorosilane.

4. A process in accordance with one of claims 1) to 3) characterized by at least partially hydrogenating the olefinic unsaturations of the coupled polymer while leaving the aromatic unsaturations essentially unchanged by contacting the final coupled polymer with hydrogen and a hydrogenation catalyst under hydrogenation conditions, and recovering a hydrogenated coupled polymer as the product of the process.

5. A process in accordance with one of claims 1) to 4) characterized in that said living polymer Q - M is produced by polymerizing the monomers in at least one polymerization step under polymerization conditions in a hydrocarbon diluent and utilizing a monoalkali initiator having the formula

$$R - M$$

wherein R is a hydrocarbyl radical having 1 to about 20 carbon atoms per molecule and M is an alkali metal selected from the group consisting of sodium, potassium and lithium.

6. A coupled polymer made by a process defined in one of claims 1) to 5).

7. A coupled polymer having a molecular weight distribution as characterized by the GPC curves of the two-step coupled polymer shown in the drawing.

8. A polymer having the formula

$$Q_{m'} - X' \leftarrow (Y - Q')_e$$

wherein m' polymerchains Q - and e units - Y - Q' are attached to a central hydrocarbyl unit X' and wherein Q is a polymer or copolymer of at least one alkadiene of 4 to about 12 carbon atoms, Y is a radical or bond resulting from a coupling process with a difunctional coupling agent capable of coupling alkali metal terminated Q polymers, the radicals Q' which can be the same or different are -Q or $\leftarrow(X'' - Q_{m''})$, X' and X" is a central, hydrocarbyl unit derived from coupling agents of 10 to about 30 carbon atoms having two or three vinyl radicals directly attached to otherwise unsubstituted or alkyl substituted benzene, bi-phenyl, or naphthalene, the central units X' and X" being the same or different, and e, m' and m" being integers and the average number of polymer chains Q being present in the molecules is in the range of 8 to 15.

9. A polymer in accordance with claim 8) characterized in that said central units X' are derived from divinylbenzene and said radical Y is derived from a coupling agent selected from the group consisting of carbon monoxide, carbon dioxide, α,α'-dichloro-p-xylene, methyl methacrylate and dimethyl dichlorosilane.

10. A polymer in accordance with claim 8) or 9) characterized in that Q is a polymer chain of the structure

E - D -

wherein E represents a block selected from the group of hydrogenated low vinyl polybutadiene and polyvinylarene from monovinylarene monomers having 8 to 20 carbon atoms per molecules and D comprises one or more homopolymer or copolymer blocks of alkadiene monomers of 4 - 12 carbon atoms contributing rubbery properties to the polymer.

DOCKET 255
INVENTOR: F. E. NAYLOR
SHEET 1 OF 5

1/5

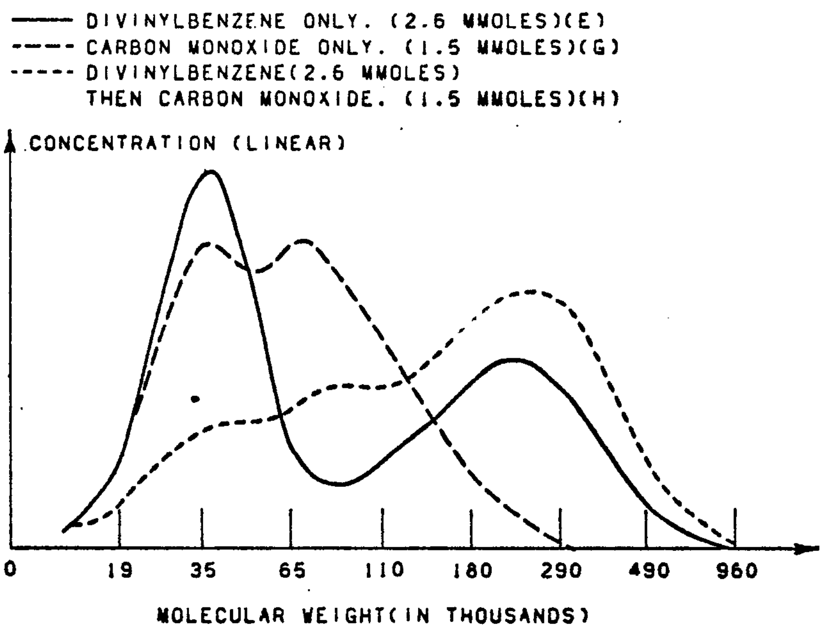


*FIG. 1*

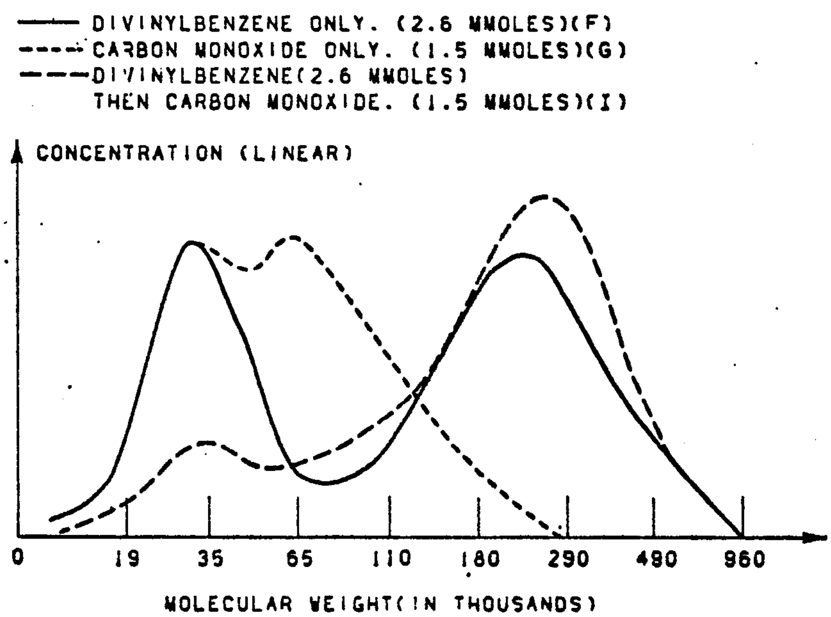


*FIG. 2*

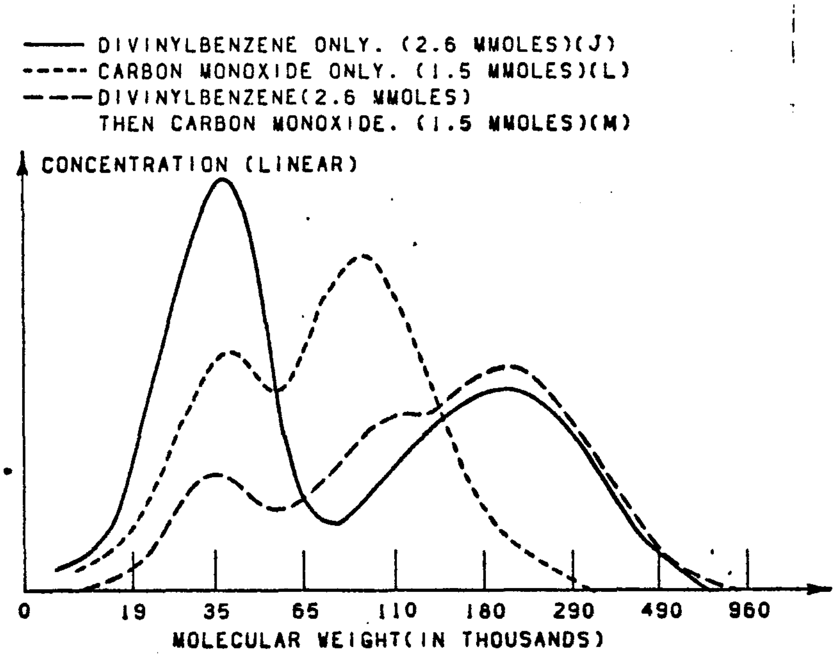
DIVINYLBENZENE ONLY. (2.6 MMOLES)(J)
CARBON MONOXIDE ONLY. (1.5 MMOLES)(L)
DIVINYLBENZENE(2.6 MMOLES)
THEN CARBON MONOXIDE. (1.5 MMOLES)(M)
CONCENTRATION (LINEAR)
0
19
35
65
110
180
290
490
960
MOLECULAR WEIGHT(IN THOUSANDS)

FIG. 3

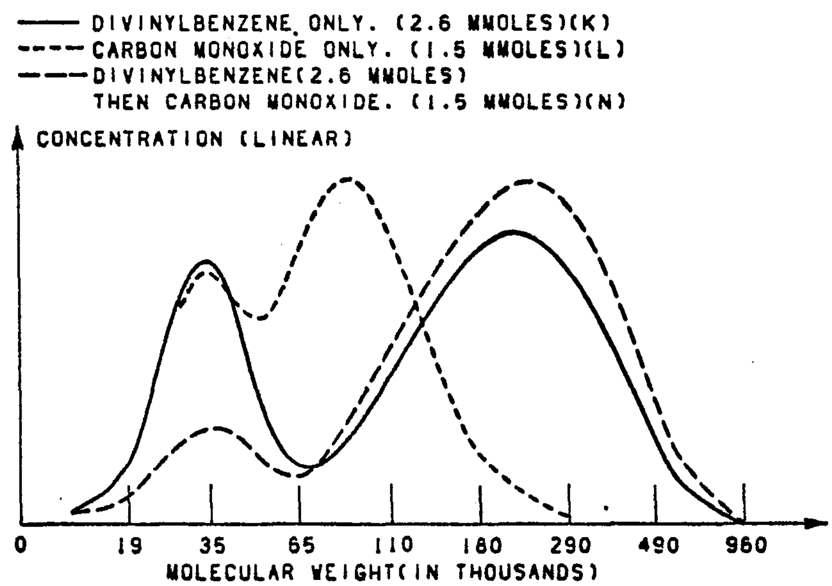
DIVINYLBENZENE ONLY. (2.6 MMOLES)(K)
CARBON MONOXIDE ONLY. (1.5 MMOLES)(L)
DIVINYLBENZENE(2.6 MMOLES)
THEN CARBON MONOXIDE. (1.5 MMOLES)(N)
CONCENTRATION (LINEAR)
0
19
35
65
110
180
290
490
960
MOLECULAR WEIGHT(IN THOUSANDS)

FIG. 4

3/5

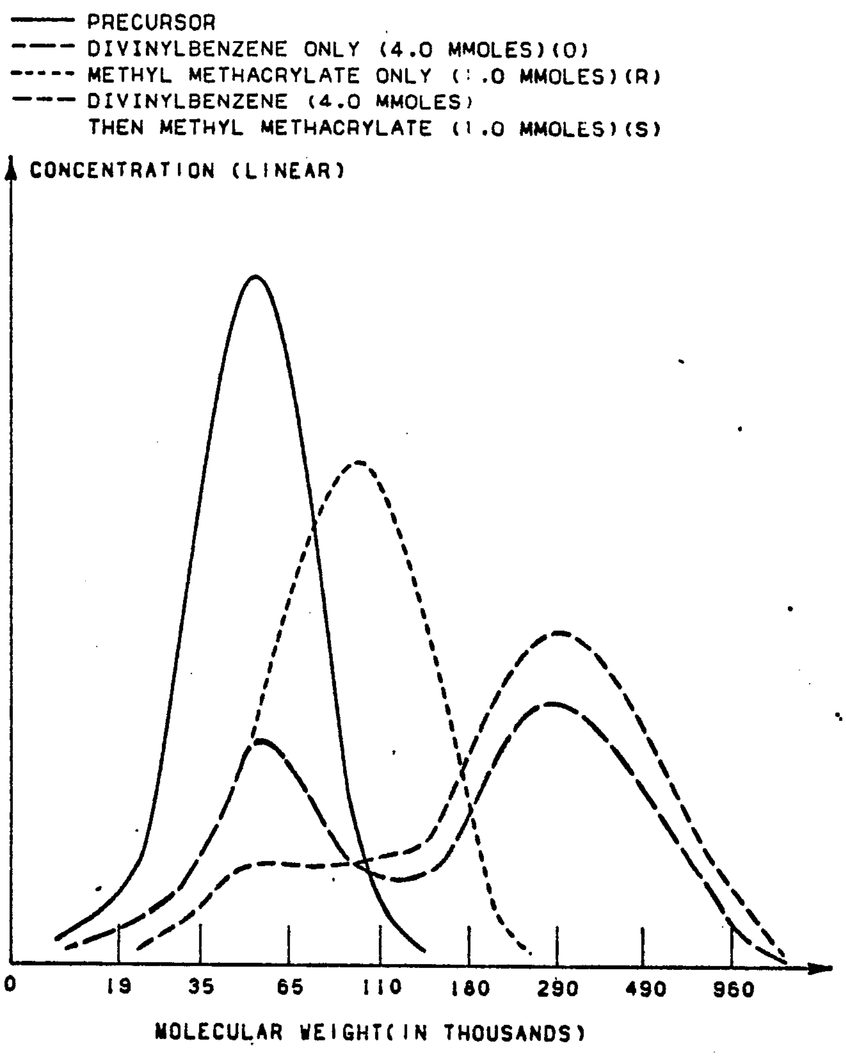
PRECURSOR
DIVINYLBENZENE ONLY (4.0 MMOLES)(O)
METHYL METHACRYLATE ONLY (1.0 MMOLES)(R)
DIVINYLBENZENE (4.0 MMOLES)
THEN METHYL METHACRYLATE (1.0 MMOLES)(S)
CONCENTRATION (LINEAR)
0
19
35
65
110
180
290
490
960
MOLECULAR WEIGHT(IN THOUSANDS)

*FIG. 5*

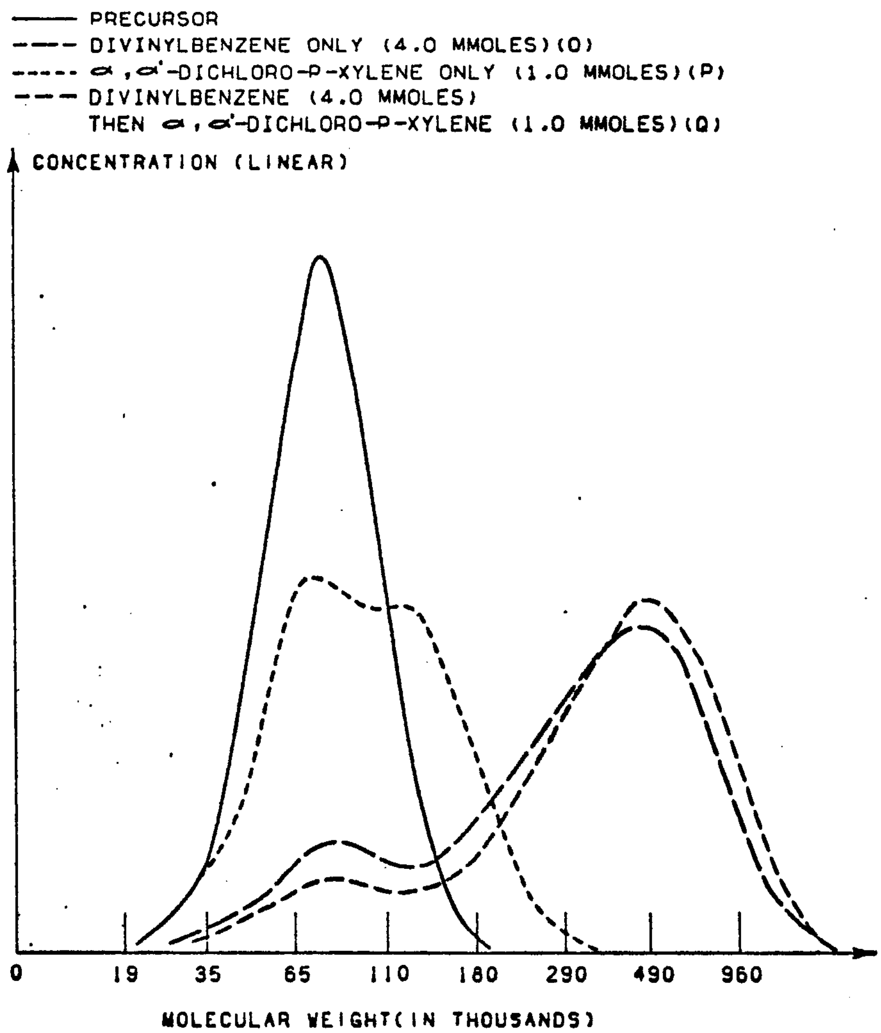
PRECURSOR
DIVINYLBENZENE ONLY (4.0 MMOLES)(O)
α,α'-DICHLORO-P-XYLENE ONLY (1.0 MMOLES)(P)
DIVINYLBENZENE (4.0 MMOLES)
THEN α,α'-DICHLORO-P-XYLENE (1.0 MMOLES)(Q)
CONCENTRATION (LINEAR)
0
19
35
65
110
180
290
490
960
MOLECULAR WEIGHT(IN THOUSANDS)

FIG. 6

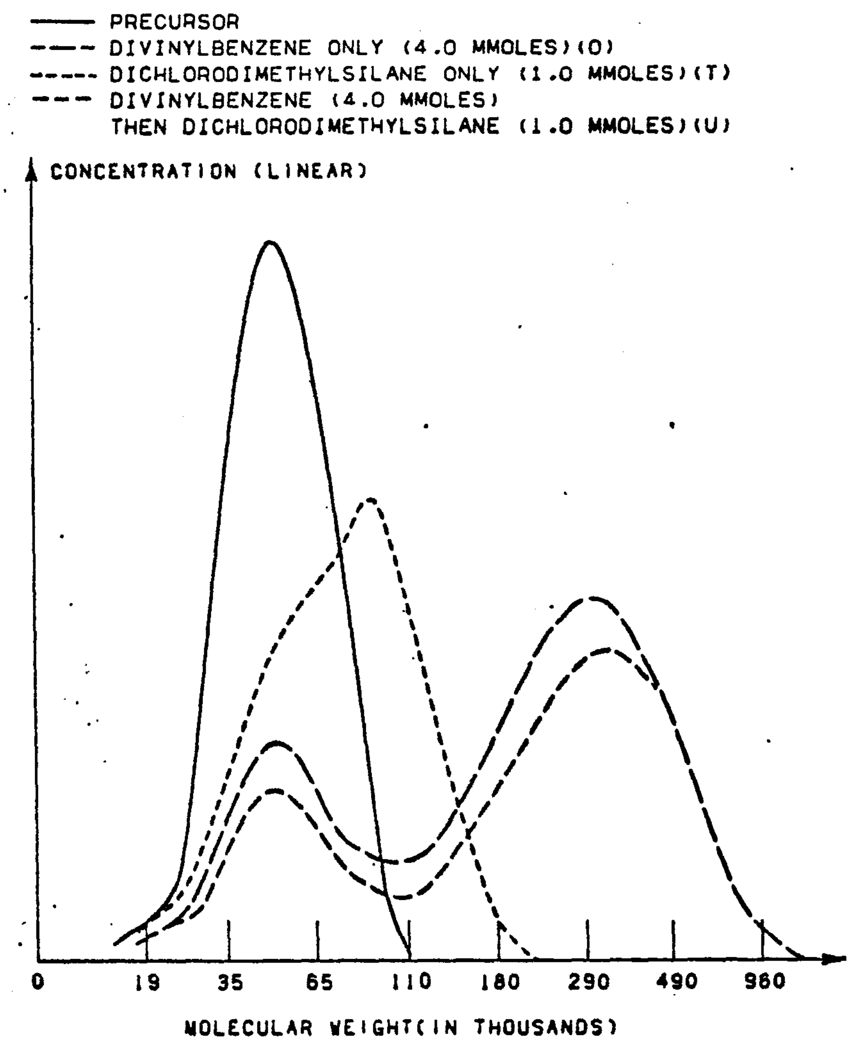
PRECURSOR
DIVINYLBENZENE ONLY (4.0 MMOLES)(O)
DICHLORODIMETHYLSILANE ONLY (1.0 MMOLES)(T)
DIVINYLBENZENE (4.0 MMOLES)
THEN DICHLORODIMETHYLSILANE (1.0 MMOLES)(U)
CONCENTRATION (LINEAR)
0
19
35
65
110
180
290
490
960
MOLECULAR WEIGHT(IN THOUSANDS)

FIG. 7

0002012

European Patent Office

# EUROPEAN SEARCH REPORT

Application number
EP 78 10 1302

## DOCUMENTS CONSIDERED TO BE RELEVANT

| Category | Citation of document with indication, where appropriate, of relevant passages | Relevant to claim |
|---|---|---|
| | FR - A - 2 186 483 (SHELL)<br>* Claim 1; page 10, lines 4-6; page 11, lines 24,25; page 1, lines 13-15 *<br>-- | 1,2,5 |
| | US - A - 3 661 873 (A.F. HALASA et al.)<br>* Claim 1; column 7, lines 40-57 *<br>-- | 1-3,5 |
| | US - A - 3 725 369 (A.F. HALASA et al.)<br>* Claim 1; column 8, line 18 to column 9, line 26 *<br>-- | 1-3,5 |
| | US - A - 3 725 370 (A.F. HALASA et al.)<br>* Claim 1; column 7, line 63 to column 8, line 41 *<br>-- | 1-3,5 |
| | FR - A - 2 340 959 (SHELL)<br>* Claim 17; page 3, lines 12-24 *<br>-- | 3-5 |
| A | DE - A - 2 529 065 (THE UNIVERSITY OF AKRON)<br>* Claims 1,2 *<br>---- | |

CLASSIFICATION OF THE APPLICATION (Int. Cl.²)

C 08 G 81/02
C 08 C 19/44

TECHNICAL FIELDS SEARCHED (Int.Cl.²)

C 08 G 81/02
C 08 C 19/44

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-02-1979 | VAN HUMBEECK |

EPO Form 1503.1 06.78